# EUROPEAN PATENT SPECIFICATION

(11) **EP 1 442 542 B1**
(45) Date of publication and mention of the grant of the patent: **17.10.2007**
(21) Application number: 02775092.6
(22) Date of filing: 16.10.2002
(51) Int. Cl.: H04H 1/00, G11B 20/00

(54) **SYSTEM FOR ENCODING AUXILIARY INFORMATION WITHIN A SIGNAL**
VORRICHTUNG ZUR KODIERUNG VON HILFSINFORMATIONEN IN EINEM SIGNAL
SYSTEME PERMETTANT DE CODER DES INFORMATIONS AUXILIAIRES A L'INTERIEUR D'UN SIGNAL

(30) Priority: 17.10.2001 EP 01203966
(43) Date of publication of application: 04.08.2004
(73) Proprietor: Koninklijke Philips Electronics N.V., 5621 BA Eindhoven (NL)
(72) Inventor: LEMMA, Aweke, N., NL-5656 AA Eindhoven (NL)
(74) Representative: Groenendaal, Antonius W. M.
(86) International application number: PCT/IB2002/004278
(87) International publication number: WO 2003/034627

(56) References cited:
- WO-A-97/33391
- US-A- 5 764 763
- US-A- 5 940 135
- SWANSON M D ET AL: "Robust audio watermarking using perceptual masking" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, vol. 66, no. 3, 28 May 1998 (1998-05-28), pages 337-355, XP004124956 ISSN: 0165-1684
- HAITSMA J ET AL: "AUDIO WATERMARKING FOR MONITORING AND COPY PROTECTION" PROCEEDINGS ACM MULTIMEDIA 2000 WORKSHOPS. MARINA DEL REY, CA, NOV. 4, 2000, ACM INTERNATIONAL MULTIMEDIA CONFERENCE, NEW YORK, NY: ACM, US, vol. CONF. 8, 4 November 2000 (2000-11-04), pages 119-122, XP001003707 ISBN: 1-58113-311-1

## Description

### BACKGROUND TO THE INVENTION

The invention relates to methods of embedding an host signal with auxiliary information comprising the steps of filtering the host signal to produce a modified signal and encoding the auxiliary information within the modified signal using a cross-correlation technique. The invention also relates encoding systems for embedding auxiliary information within a host signal comprising a filtering means for reducing predetermined frequency components from the host signal, and an encoding means for encoding the auxiliary information within the filtered host signal using a cross-correlation technique to produce an encoded signal. The invention further relates to systems and methods for decoding auxiliary information from such embedded signals.

US 5,940,135 is an example of an apparatus and method using a correlation based watermarking technique, in which the correlation function of a host signal is modulated according to the value of an auxiliary information signal by adding a host modifying signal to the host signal. The auxiliary signal may be decoded by generating the auto correlation function of the encoded signal and extracting the auxiliary signal according to well-known signal extraction techniques. A filter is used to improve the audibility behaviour of the watermarked signal.

Although embedding techniques using cross correlation work well for a wide range of signals they fail to give satisfactory results in audio signals having distinctive tones and/or strong base components. In particular, it is recognised that the success of the embedding algorithm, as described in US 5,940,135, depends among other things, on the value of the cross correlation delay and the nature of the audio signal. In an ideal watermarking scheme, one would prefer to run the embedding algorithm with minimal interference. The necessity to determine an appropriate cross correlation delay for a particular signal undermines this preference.

In an effort to make the success of the embedding algorithm cross correlation delay independent, US 5,940,135 provides a technique using multiple correlation delays.

The multiple delay approach reduces the problems associated with selection of the cross correlation delay. However, the multiple delay technique does not guarantee performance for all types of audio material. In addition, the multiple delay approach necessitates the use of a significant amounts of computational power, which might otherwise be used to embed multiple payloads.

A technical problem to be solved is therefore the provision of an effective alternative to the multiple delay embedding technique of US 5,940,135.

An object of the present invention is therefore the provision of an alternative embedding technique to the multiple delay approach of US 5,940,135, which works well for a wide range of signals.

### SUMMARY OF THE INVENTION

Accordingly, a first embodiment of the invention provides a method of embedding a host signal with auxiliary information comprising the steps of:
filtering the host signal to produce a modified signal,
encoding the auxiliary information within the modified signal using a cross-correlation technique,
characterised in that the step of filtering reduces the magnitude of at least one of the following in the signal:
a) low frequency components, and
b) dominant tonal components
and the method further comprises the step of increasing the magnitudes of components in the encoded signal which were reduced by the filtering step.

The host signal may be a (multi-)media signal such as an audio signal, a video signal and/or a data signal.

By reducing the dominant tonal contents of the signal prior to encoding, the success of the embedding technique becomes substantially independent of the cross correlation delay selected and thus provides an alternative to the multiple delay method of US5,940,135. Similarly, the removal of the low frequency tonal contents of the signal prior to encoding improves the success of the embedding technique as low frequency components can cause strong interfering correlation noise that can significantly degrade watermark detection.

In the case of reducing the dominant tonal contents, appropriate filtering may be used to reduce the level of the dominant tonal components. A filter having an inverse characteristic to the appropriate filter may be used to increase the previously reduced dominant tonal contents.

The removal of the dominant tonal components flattens the power spectrum of the signal to be encoded, thus improving the delay invariance of the encoding system. The re-introduction of the dominant tonal components by inverse filtering ensures that the effect of the encoding is imperceptible to the listener.

In the case of reducing the low frequency contents of the signal, a low frequency suppresser may be used to substantially remove the low frequency content from the analog signal. The removed low frequency content may be subsequently added to the encoded modified analog signal.

An added advantage of removing low frequency components prior to encoding, and their subsequent reintroduction by adding the supressed low frequencies after encoding is that the audibility quality of the watermarked audio signal is improved.

According to a second embodiment of the invention an encoding system is provided for embedding auxiliary information within a host signal comprising:
a filtering means for reducing predetermined frequency components from the host signal, an encoding means for encoding the auxiliary information within the filtered host signal using a cross-correlation technique to produce an encoded signal,
characterized in that the encoding system further comprises a signal component increasing means for increasing the previously reduced predetermined frequency components and wherein the predetermined frequency components are selected from at least one of the following: a) low frequency components, and b) dominant tonal components.

It will be appreciated that removal of dominant tonal components and/or low frequency components from an analog signal prior to encoding with auxiliary information and the subsequent re-introduction of the removed components so that the resulting embedded analog signal appears to be the same as the original analog signal to an observer provides an improved method of encoding.

According to a third embodiment of the invention a method of decoding auxiliary information from an embedded host signal is provided comprising the steps of filtering the embedded host signal to produce a modified signal, decoding the auxiliary information from the modified signal using a cross-correlation technique, characterized in that the step of filtering reduces the magnitude of at least one of the following components in the host signal: a) low frequency components, and b) dominant tonal components.

In this embodiment, the step of filtering may include the use of a filter characteristic to reduce dominant tonal components in the embedded host signal. The step of filtering may further include the removal of low frequency components from the embedded host signal.

According to a fourth embodiment of the invention, a decoding system is provided for extracting auxiliary information from an embedded host signal comprising a filtering means for reducing predetermined frequency components from the host signal, a decoding means for extracting the auxiliary information from the filtered host signal using a cross-correlation technique, characterized in that the predetermined frequency components are selected from at least one of the following: a) low frequency components, and dominant tonal components.

The filtering means may include a low pass suppresser for removing low frequency components from the host signal. The filtering means may also include a first filter means having a filter characteristic adapted to substantially remove dominant tonal components from the host signal.

A further embodiment of the invention is directed to a transmission system comprising an input module adapted to accept a host signal for transmission, an encoding module incorporating the encoding systems adapted to encode the host signal with auxiliary information using one of the previously described encoding methods of the invention, and an output unit adapted to transmit the encoded host signal.

The invention also extends to a receiver system for use with such a transmission system, wherein the receiver system comprises an input section adapted to receive an host signal encoded with auxiliary information and a decoder which decodes the encoded host signal using one of the previously described methods and extracts the auxiliary information from the host signal.

A significant reason for the success of embedding algorithms on audio signals is the selection of correlation delay in the presence of dominant tonal components in the host signal. The present invention uses filters to flatten the power spectrum of a host signal, thus eliminating the dominant tonal components prior to the encoding or decoding process, thus reducing problems associated with delay selection. The removed components are subsequently re-introduced to ensure the encoded signal is not perceptibly different to the unencoded signal.

A further significant factor associated with the success of embedding algorithms on audio signals is the presence of low frequency components, which can cause strong interfering correlation noise that can significantly degrade watermark detection. The present invention uses filtering to remove these low frequency components prior to encoding and decoding. In the encoding process, the removed low frequency components are subsequently re-introduced to ensure there is no perceptible difference in audio quality to the listener.

These and other aspects of the present invention will be apparent from and elucidated with reference to the embodiments described hereafter.

### BRIEF DESCRIPTION OF THE DRAWINGS

The invention will now be described in greater detail with reference to the accompanying drawings in which:
Figure 1 is a block diagram representation of an encoding system according to a first aspect of the invention,
Figure 2 is a block diagram of a decoding system for use with a signal encoded using the system of Figure 1,
Figure 3 is a block diagram representation of one scheme for implementing the low frequency suppresser of Figure 1.
Figure 4 is a frequency plot of the filter characteristics for the individual filters of figure 3,
Figure 5 is a block diagram representation of an encoding system according to a second aspect of the invention,
Figure 6 is a block diagram of a decoding system for use with a signal encoded using the system of Figure 5,
Figure 7 is a block diagram representation of an encoding system according to a third aspect of the invention,
Figure 8 is a block diagram of a decoding system for use with a signal encoded using the system of Figure 7,
Figure 9 is a block diagram of a transmission system according to a fourth aspect of the invention, and
Figure 10 is a block diagram of a receiver system for use with a signal transmitted by the system of Figure 9.

### DETAILED DESCRIPTION OF THE DRAWINGS

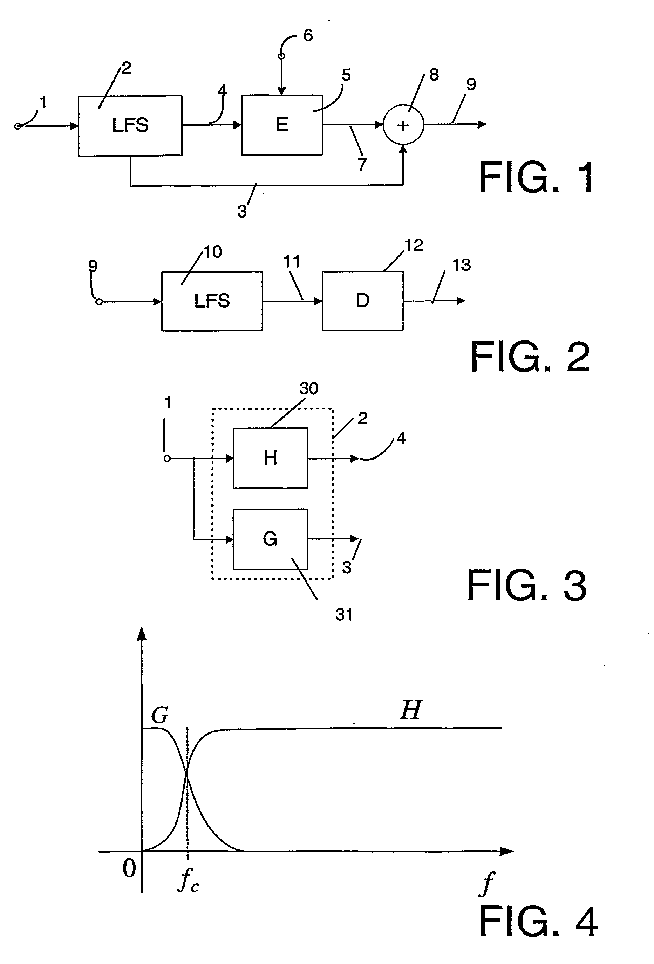

A first aspect of the invention, illustrated in simplified form in figure 1, provides an encoding system for embedding an auxiliary information signal 6 within a host signal 1, comprising a filter means in the form of a low frequency suppresser (LFS) 2, an encoder (E) 5 and a signal component increasing means in the form of a summing means 8. The incoming host signal 1 which is to be embedded with an auxiliary information signal 6 is processed by the low frequency suppresser 2, which uses filtering to divide the incoming host signal into a first signal 4 and a second signal 3. The first signal 4 is effectively the host signal suppressed of low frequencies, whereas the second signal 3 is the suppressed low frequency components of the host signal 1. The first signal 4 is encoded by the encoder 5 with the auxiliary information signal 6 using a suitable cross correlation technique. Methods, circuits, systems and algorithms for performing such cross correlation encoding techniques are well known in the art. As low frequency components are suppressed from the first signal 4, the effects of strong interfering correlation noise arising from the low frequency components are alleviated and the success rate of the encoding process on the host signal 1 is improved.

As described previously, a key feature of watermarking is that the watermark is imperceptible to the listener or viewer. Another key feature is that the watermarked host signal is not distinguishable to the listener from the non-encoded host signal. In the present case, this is made sure by adding the previously suppressed low frequencies to the host signal after the host signal has been encoded with the watermark. This is implemented in the summing means 8 shown. By successfully recombining the previously removed low frequency components with the encoded host signal, the differences between the resulting output signal from the encoder and the original host signal should be imperceptible to a listener. In the case of an audio signal, the cut off frequency of the low frequency suppresser may be in the range of 100 to 5000 Hz depending on the application, but is typically in the range of 100 to 1000 Hz. An additional advantage of the low frequency removal is that the audibility quality of the watermarked audio signals is improved. Experimental results have shown that using higher frequencies substantially improves the audibility behaviour.

The embodiments shown for simplicity of illustration have omitted components such as delay elements, Analog to Digital Converters (ADC) and Digital to Analog Converters (DAC). The skilled person will realize that these components and any combination thereof may be included as a matter of conventional design.

The invention also provides a decoding system, as illustrated in figure 2, for decoding auxiliary information from a host signal encoded using the encoding system of figure 1. It comprises a low frequency suppresser 10 and a decoder (D) 12. The low frequency suppresser 12, which may for example be a simple high pass filter, removes low frequency components from the encoded signal 9 prior to the decoder 12.

The resulting low frequency suppressed encoded host signal 11 is then decoded in the decoder 12 to extract a signal representative of the auxiliary information 13 embedded in the host signal 9. It will be appreciated that the LF suppresser 10 used in detector may be the same as the LF suppresser 2 used for the embedding system. However, in the case of the decoding system the provision of the second signal 3 comprising the low frequency components is redundant.

A particular implementation of the low frequency suppresser 2 of figure 1 is shown in Figure 3 comprising two filters H (30) and G (31). The first filter H is a high pass filter having a cut-off frequency equating to the cut-off frequency of the low frequency suppresser 2. The resulting output 4 from the first filter H is a host signal in which the low frequency components have been reduced. The second filter G is a low pass filter having the same cut-off frequency as the first filter H. The resulting output from the second filter G are the low frequency components 3 of the host signal. It will be appreciated that as the suppressed low frequency component signal 3 is not required in the decoding system, the low frequency suppresser 10 shown in the embodiment of figure 2 may be implemented using only the first filter H.

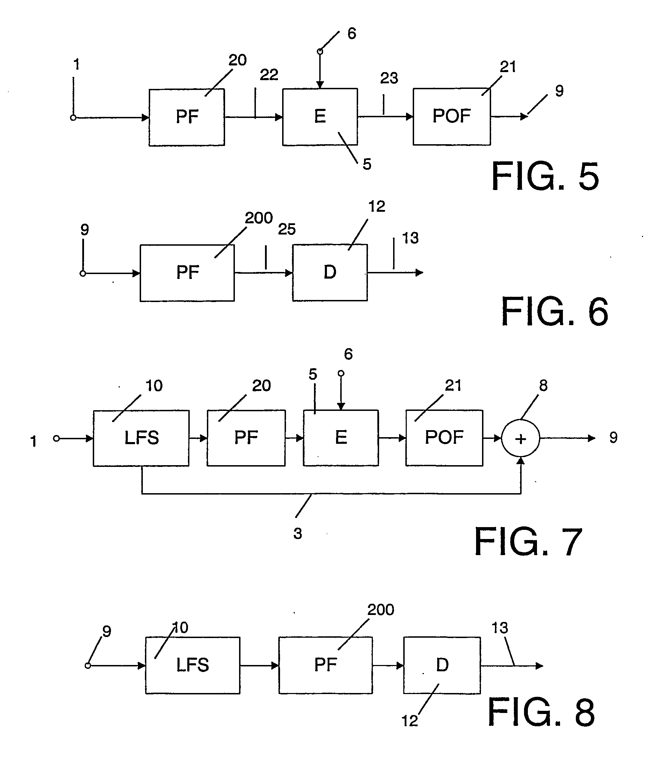

Exemplary frequency characteristic for the first and second filters G and H of the low frequency suppresser are shown in Figure 4. In particular, the second filter G is shown as having a low pass frequency characteristic and the first filter H is shown as having a high pass frequency characteristic, the cut off frequency (f_{c}) of each filter being substantially the same. As mentioned previously, a suitable cut off frequency should be in the range of 100Hz to 1000 Hz.

A further embodiment of the invention, as illustrated in Figure 5 comprises a filtering means in the form of a first (pre encoding) filter (PF) 20, an encoder 5 and signal component increasing means in the form of a second (post encoding) (POF) filter 21. An incoming host signal 1 is filtered by the first filter 20, which flattens the power spectrum of the host signal and in doing so substantially removes dominant tonal components from the host signal.

A number of techniques may be used to design or implement the first filter 20. These techniques are primarily based on the power spectrum of the analog signal or an estimate thereof. For example, the filter may be derived from a measurement of the power spectrum of the host signal. While this would achieve optimum results, it would require significant computational power. An alternative method of designing the filter would be to derive fixed universal filters after statistically analyzing a large set of analog signals. A third option which is a compromise between the first two options is to use a piece-wise stationary shaping filter where the filter remain unchanged throughout a certain fragment of analog material and only changes when the fragment changes. It will be appreciated that the filter may be implemented in either the temporal or frequency domain. As dominant tonal components are substantially removed from the host signal for encoding, the effect of correlation delay selection as a factor in the success of the encoding process on the host signal is reduced.

The filtered host signal 22 is then encoded with the auxiliary information signal 6 by the encoder 5 as described above with respect to the first embodiment. The encoded signal is then filtered by the second filter 21. The second filter 21 has a filtering characteristic which is the inverse of the first filter. As a result, the second filter 21 restores the previously reduced dominant tonal contents in the encoded modified host signal to their original levels. As a result, differences between the embedded output signal 9 from the second filter 21 and the original host signal 1 should be imperceptible to a listener.

A detector or decoder system for extracting auxiliary information from a host signal encoded using the embodiment of Figure 5, as illustrated in Figure 6, comprises a filtering means provided by a first filter 200 and a decoder 12. Preferably, the first (pre decoding) filter 200 has a filter characteristic which substantially matches the filter characteristic of the first filter 20 in the encoding system. However, alternative filters may be used between the encoding system and the detector system. For example, in the case of an encoding system the first filter may be derived from a measurement of the power spectrum of the host signal (a complex filter), whereas the filter in an equivalent detector may be implemented using a fixed universal filter (simpler filter) obtained from the statistical analysis of a large set of analog signals. The results using different filters may not be as reliable as the results obtained using substantially the same filter characteristics.

The filtered signal 25 is then passed to the decoder 12 of the decoding system and the auxiliary information 13 extracted.

Although the performance of encoders and decoders will be improved using the method of LF suppression as for example implemented in Figure 1 or the spectrum flattening technique using the dominant tone removal as implemented in Figure 5, improved performance may be achieved by combining the two techniques.

An example of such an improved encoding system is illustrated in Figure 7 comprising an LF suppresser 10, a first filter 200, an encoder, a second filter and a summing means 8 which may be used to embed a host analog signal 1 with auxiliary information 6 to produce an encoded host signal 9.

In operation, the host signal 1 is processed by the LF suppresser 10 which substantially removes the low frequency components from the host signal. The resulting modified signal is then further modified by the first filter 200 to remove dominant tonal compounds. The resulting modified signal is then encoded with the auxiliary information 6 by the encoder 5. The encoded modified host signal is subsequently processed by the second filter 21. The second filter, which has a characteristic substantially inverse to the first filter, restores the previously reduced dominant tonal contents to the encoded signal. Finally, the previously suppressed low frequency components are re-inserted into the encoded signal by the summing means 8.

A detector for detecting an auxiliary information signal embedded in a host signal by the systems of Figure 7 is shown in Figure 8 comprising an LF suppresser, a filter and a decoder. In operation, an encoded host signal is processed by the LF suppresser which removes low frequency components, the resulting low frequency suppressed encoder host signal is then filtered by the pre-filter which flattens the spectrum of the signal by reducing the dominant tonal compounds from the resulting signal.

It will be appreciated that the order of the LF suppresser 10 and first (pre-encoding) filter 20, i.e. the spectrum flattening filter, in the embodiment of figure 7, may be altered without effect depending on the way in which filtering is performed.

However, if the order of the low frequency suppressing filter and the first filter are interchanged, the point where the low frequency component is re-admitted should be adjusted accordingly. Thus, if the order of the first filter and the low frequency suppresser are swapped, then the order of the summing means and the second filter should also be swapped.

It will further be appreciated by those skilled in the art that a number of techniques may be used to implement the embodiment herein described and that a number of variants are possible. For example, the low frequency suppresser and the first filter may be combined. This combination would be straightforward in the detector, however in the encoder care would be required in designing the phase behaviour of the combined filter as the low frequency portion of the filter spectrum could introduce severe audibility problems in audio signals.

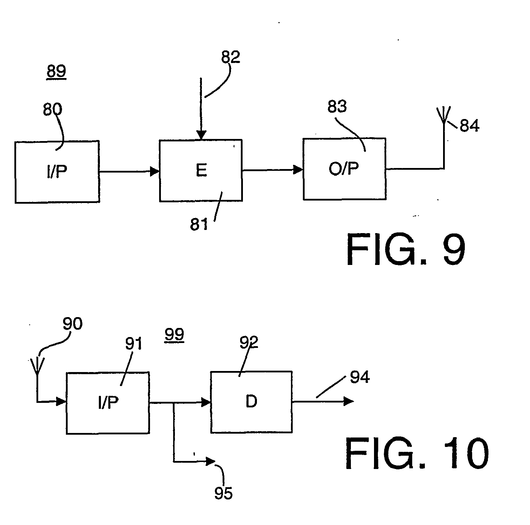

A further aspect of the invention, as shown in figure 9, is directed to a broadcasting system 89 used to transmit an audio signal to one or more receiver units over a broadcast channel, e.g. radio, cable or computer network. The broadcasting system includes a input section 80 which is adapted to accept an audio signal from one or more sources. The input section may for example include a multiplexer for selectively switching between two or more available input signals.

The audio signal is then provided by the input section to the encoder module 81. The encoder module encodes the audio signal with a auxiliary information signal using one of the previously described encoding schemes. The auxiliary information signal may be generated by the broadcast system or provided by an external source. The resulting encoded signal is then passed to the output section which transmits the embedded audio signal over the communications channel.

In the case where the broadcasting system is a radio broadcasting system, the output module 83 would include an radio frequency (RF) section, coupled to an appropriate antenna 84, for modulating the encoded signal and transmitting it. The RF section may include RF filtering, a fixed frequency oscillator, modulator circuits and other components conventionally included in RF transmitters.

The transmitted encoded audio signal is then available for reception by any receiver suitably connected to the communications channel. A suitable receiver 99 is illustrated in Figure 10 and comprises an input section and a decoder. The input section 91 is coupled to the communications channel and is adapted to receive signals from the channel and demodulate them. In the case of a RF receiver, the input section may include an antenna 90 coupled to a RF section comprising RF filtering, a fixed frequency oscillator, down conversion circuits and other components conventionally included in Rf sections of radio receivers. The input section provides the demodulated encoded signals to the decoder 92, which extracts the auxiliary information from the encoded signal. This auxiliary information 94 may then be provided to users, for example, by means of a display unit. The input section 91 may separately supply its output 95 to other circuits, for example, to allow the playing of received audio material on a loudspeaker.

It will also be appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The words "comprises/comprising" and the words "having/including" when used herein with reference to the present invention are used to specify the presence of stated features, integers, steps or components but does not preclude the presence or addition of one or more other features, integers, steps, components or groups thereof.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

## Claims

1. A method of embedding a host signal (1) with auxiliary information (6) comprising the steps of:
filtering (2;20) the host signal to produce a modified signal (4;22),
encoding (5) the auxiliary information within the modified signal using a cross-correlation technique to produce an encoded signal,
**characterized in that** the step of filtering reduces the magnitude of at least one of the following components in the host signal:
a) low frequency components, and
b) dominant tonal components
and the method further comprises the step of
increasing (8;21) the magnitudes of components in the encoded signal which were reduced by the filtering step.

2. A method according to claim 1, wherein the step of filtering (2) includes the use of a filter characteristic to reduce dominant tonal components and the step of increasing the magnitudes of dominant tonal components is implemented using an inverse filter characteristic.

3. A method according to claim 1, wherein the step of filtering (2;10) includes the removal of low frequency components from the host signal (1) and the use of a filter characteristic to reduce dominant tonal components and the step of increasing the magnitudes of components is performed by adding (8) the removed low frequency components to the encoded signal.

4. An encoded signal comprising a modified signal which has been obtained by filtering a host signal, the encoded signal further comprising auxiliary information which has been encoded within the modified signal using a cross-correlation technique, the encoded signal being **characterized in that** the filtering has reduced the magnitude of at least one of the following components in the host signal:
a) low frequency components, and
b) dominant tonal components wherein in the encoded signal the magnitudes have been increased of components which were reduced by the filtering.

5. A storage medium having an encoded signal according to claim 4 stored thereon.

6. An encoding system for embedding auxiliary information within a host signal (1) comprising:
a filtering means (2;20) for reducing predetermined frequency components from the host signal to produce a filtered host signal (4;22),
an encoding means (5) for encoding the auxiliary information within the filtered host signal using a cross-correlation technique to produce an encoded signal,
**characterized in that** the encoding system further comprises:
a signal component increasing means (8;21) for increasing the previously reduced predetermined frequency components
and wherein the predetermined frequency components are selected from at least one of the following:
a) low frequency components, and
b) dominant tonal components.

7. An encoding system according to claim 6, wherein said filtering means (2;20) includes a low pass suppresser (2) for removing low frequency components from the host signal (1) and the signal component increasing means (8;21) includes a summing means (8) for adding the removed low frequency components to the encoded signal (9).

8. An encoding system according to claim 6, wherein said filtering means (2;20) includes a first filter means (20) having a filter characteristic adapted to substantially remove dominant tonal components from the host signal (1) and the signal component increasing means (8;21) includes a second filter (21), wherein the second filter has a filter characteristic corresponding to the inverse characteristic of the first filter.

9. A transmission system (89) comprising an input section (80) for receiving a signal to be broadcast, an encoding system (81) as claimed in claim 6 for accepting the signal to be broadcast from the input section and encoding it with auxiliary information to provide an embedded signal and an output section (83) adapted to transmit the embedded signal over a communications channel.

10. A method of decoding auxiliary information from an embedded host signal (9) comprising the steps of:
filtering the embedded host signal to produce a modified signal,
decoding the auxiliary information (13) from the modified signal using a cross-correlation technique,
**characterized in that** the step of filtering (10;200) reduces the magnitude of at least one of the following components in the host signal
a) low frequency components, and
b) dominant tonal components.

11. A method according to claim 10, wherein the step of filtering (10;200) includes the use of a filter characteristic to reduce dominant tonal components in the embedded host signal.

12. A method according to claim 10, wherein the step of filtering (10;200) includes the removal of low frequency components from the embedded host signal.

13. A decoding system for removing auxiliary information (13) embedded within a host signal (1) comprising:
a filtering means (10;200) for reducing predetermined frequency components in the
embedded host signal,
a decoding means (12) for extracting the auxiliary information (13) from the filtered host signal using a cross-correlation technique,
**characterized in that** the predetermined frequency components are selected from at least one of the following:
a) low frequency components, and
b) dominant tonal components.

14. A decoding system according to claim 13, wherein said filtering means (10;200) includes a low pass suppresser (10) for removing low frequency components from the embedded host signal.

15. A decoding system according to claim 13, wherein said filtering means includes a first filter means (200) having a filter characteristic adapted to substantially remove dominant tonal components from the host signal.

16. A receiver system (99) comprising an input section (91) adapted to receive an embedded signal from a communications channel, and a decoding system (92) as claimed in claim 13 coupled to said input section and being adapted to extract auxiliary information from the embedded signal.

## Patentansprüche

1. Verfahren zum Einbetten eines Gastgebersignals (1) mit Hilfsinformation (6), wobei dieses Verfahren die nachfolgenden Verfahrensschritte umfasst:
- das Filtern (2; 20) des Gastgebersignals zum Erzeugen eines modifizierten Signals (4; 22),
- das Codieren (5) der Hilfsinformation innerhalb des modifizierten Signals unter Anwendung von Kreuzkorrelationstechniken zum Erzeugen eines codierten Signals,
**dadurch gekennzeichnet, dass** der Filterschritt die Größe wenigstens eines der nachfolgenden Anteile in dem Gastgebersignal reduziert:
a) NF-Anteile, und
b) dominante Farbanteile
und wobei das Verfahren weiterhin den nachfolgenden Verfahrensschritt umfasst:
- das Steigern (8; 21) der Größen von Anteilen in dem codierten Signal, die durch den Filterschritt reduziert wurden.

2. Verfahren nach Anspruch 1, wobei der Filterschritt (2) die Verwendung einer Filterkennlinie umfasst zum Reduzieren dominanter Farbanteile und der Schritt der Steigerung der Größen dominanter Farbanteile eine inverse Filterkennlinie verwendet.

3. Verfahren nach Anspruch 1, wobei der Filterschritt (2; 10) das Entfernen von NF-Anteilen aus dem Gastgebersignal (1) umfasst und die Verwendung einer Filterkennlinie zum Reduzieren dominanter Farbanteile und der Schritt der Steigerung der Größen von Anteilen dadurch durchgeführt wird, dass die entfernten NF-Anteile zu dem codierten Signal hinzugefügt werden.

4. Codiertes Signal mit einem modifizierten Signal, das durch Filterung eines Gastgebersignals erhalten worden ist, wobei das codierte Signal weiterhin Hilfsinformation enthält, das innerhalb des modifizierten Signals codiert worden ist, und zwar unter Anwendung einer Kreuzkorrelationstechnik, wobei das codierte Signal **dadurch gekennzeichnet ist, dass** die Filterung die Größe wenigstens der nachfolgenden Anteile in dem Gastgebersignal reduziert hat:
a) NF-Anteile, und
b) dominante Farbanteile, in denen in dem codierten Signal die Größen von Anteilen vergrößert worden sind, die durch Filterung reduziert wurden.

5. Speichermedium mit einem darauf gespeicherten codierten Signal nach Anspruch 4.

6. Codierungssystem zum Einbetten von Hilfsinformation in ein Gastgebersignal (1), wobei dieses System Folgendes umfasst:
- ein Filtermittel (2; 20) zum Reduzieren vorbestimmter Frequenzanteile aus dem Gastgebersignal zum Erzeugen eines gefilterten Gastgebersignals (4; 22),
- ein Codierungsmittel (5) zum Codieren der Hilfsinformation in dem gefilterten Gastgebersignal unter Anwendung einer Kreuzkorrelationstechnik zum Erzeugen eines codierten Signals,
**dadurch gekennzeichnet, dass** das Codierungssystem weiterhin Folgendes umfasst:
- ein Signalanteilsteigerungsmittel (8; 21) zur Steigerung der vorher reduzierten vorbestimmten Frequenzanteile, und wobei die vorbestimmten Frequenzanteile aus wenigstens einem der nachfolgenden Anteile selektiert werden:
a) NF-Anteile, und
b) dominante Farbanteile.

7. Codierungssystem nach Anspruch 6, wobei das genannte Filtermittel (2; 20) einen Tiefpassunterdrücker (2) aufweist zum Entfernen von NF-Anteilen aus dem Gastgebersignal (1) und wobei das Signalanteilsteigerungsmittel (8; 21) ein Summierungsmittel (8) aufweist zum Hinzufügen der entfernten NF-Anteile zu dem codierten Signal (9).

8. Codierungssystem nach Anspruch 6, wobei das genannte Filtermittel (2; 20) ein erstes Filtermittel (20) mit einer Filterkennlinie aufweist, vorgesehen um im Wesentlichen dominante Farbanteile aus dem Gastgebersignal (1) zu entfernen und wobei das Signalanteilsteigerungsmittel (8; 21) ein zweites Filter (21) aufweist, wobei das zweite Filter eine Filterkennlinie aufweist entsprechend der inversen Kennlinie des ersten Filters.

9. Übertragungssystem (89) mit einem Eingangsteil (80) zum Empfangen eines auszusendenden Signals, mit einem Codierungssystem (81) nach Anspruch 6 zum Akzeptieren des auszusendenden Signals aus dem Eingangsteil und zum Codieren desselben mit Hilfsinformation zum Schaffen eines eingebetteten Signals und mit einem Ausgangsteil (83), vorgesehen zum Übertragen des eingebetteten Signals über einen Kommunikationskanal.

10. Verfahren zum decodieren von Hilfsinformation aus einem eingebetteten Gastgebersignal (9), wobei dieses Verfahren die nachfolgenden Verfahrensschritte umfasst:
- das Filtern des eingebetteten Gastgebersignals zum Erzeugen eines modifizierten Signals,
- das Decodieren der Hilfsinformation (13) aus dem modifizierten Signal unter Anwendung einer Kreuzkorrelationstechnik,
**dadurch gekennzeichnet, dass** der Filterungsschritt (10; 200) die Größe wenigstens eines der nachfolgenden Anteile in dem Gastgebersignal reduziert:
a) der NF-Anteile, und
b) dominanter Farbanteile.

11. Verfahren nach Anspruch 10, wobei der Filterungsschritt (10; 200) die Verwendung einer Filterkennlinie umfasst zum Reduzieren dominanter Farbanteile in dem eingebetteten Gastgebersignal.

12. Verfahren nach Anspruch 10, wobei der Filterungsschritt (10; 200) das Entfernen von NF-Anteilen aus dem eingebetteten Gastgebersignal umfasst.

13. Decodiersystem zum Entfernen von Hilfsinformation (13), eingebettet in ein Gastgebersignal (1), wobei das System Folgendes umfasst:
- ein Filtermittel (10; 200) zum reduzieren vorbestimmter Frequenzanteile in dem eingebetteten Gastgebersignal,
- ein Decodiermittel (12) zum Extrahieren der Hilfsinformation (13) aus dem gefilterten Gastgebersignal unter Anwendung einer Kreuzkorrelationstechnik,
**dadurch gekennzeichnet, dass** die vorbestimmten Frequenzanteile aus wenigstens einem der nachfolgenden Anteile selektiert werden:
a) HF-Anteile, und
b) dominante Farbanteile.

14. Decodiersystem nach Anspruch 13, wobei das genannte Filtermittel (10; 200) einen Tiefpassunterdrücke (10) aufweist zum Entfernen von NF-Anteilen aus dem eingebetteten Gastgebersignal.

15. Decodiersystem nach Anspruch 13, wobei das genannte Filtermittel ein erstes Filtermittel (200) mit einer Filterkennlinie aufweist, vorgesehen zum im Wesentlichen Entfernen dominanter Farbanteile aus dem Gastgebersignal.

16. Empfängersystem (99) mit einem Eingangsteil (91) vorgesehen zum Empfangen eines eingebetteten Signals aus einem Kommunikationskanal, und mit einem Decodiersystem (92) nach Anspruch 13, das mit dem genannten Eingangsteil gekoppelt ist und vorgesehen ist zum Extrahieren der Hilfsinformation aus dem eingebetteten Signal.

## Revendications

1. Procédé d'inclusion dans un signal hôte (1) d'informations auxiliaires (6) comprenant les étapes suivantes:
filtrage (2;20) du signal hôte pour produire un signal modifié (4;22),
codage (5) des informations auxiliaires à l'intérieur du signal modifié en utilisant une technique de corrélation croisée pour produire un signal codé,
**caractérisé en ce que** l'étape de filtrage réduit l'amplitude d'au moins une des composantes suivantes dans le signal hôte:
a) composantes de basse fréquence, et
b) composantes sonores dominantes
et le procédé comprend de plus l'étape suivante
augmentation (8;21) des amplitudes de composantes dans le signal codé qui avaient été réduites par l'étape de filtrage.

2. Procédé selon la revendication 1, dans lequel l'étape de filtrage (2) inclut l'utilisation d'une caractéristique de filtre pour réduire des composantes sonores dominantes et l'étape d'augmentation des amplitudes de composantes sonores dominantes est implémentée en utilisant une caractéristique de filtre inverse.

3. Procédé selon la revendication 1, dans lequel l'étape de filtrage (2;10) inclut le retrait de composantes de basse fréquence du signal hôte (1) et l'utilisation d'une caractéristique de filtre pour réduire des composantes sonores dominantes et l'étape d'augmentation des amplitudes de composantes est réalisée en ajoutant (8) les composantes de basse fréquence enlevées au signal codé.

4. Signal codé comprenant un signal modifié qui a été obtenu en filtrant un signal hôte, le signal codé comprenant de plus des informations auxiliaires qui ont été codées à l'intérieur du signal modifié en utilisant une technique de corrélation croisée, le signal codé étant **caractérisé en ce que** le filtrage a réduit l'amplitude d'au moins une des composantes suivantes dans le signal hôte:
a) composantes de basse fréquence, et
b) composantes sonores dominantes,
dans lequel, dans le signal codé, les amplitudes de composantes qui avaient été réduites par le filtrage ont été augmentées.

5. Support de stockage sur lequel est stocké un signal codé selon la revendication 4.

6. Système de codage pour inclure des informations auxiliaires à l'intérieur d'un signal hôte (1) comprenant:
un moyen de filtrage (2;20) pour réduire des composantes de fréquence prédéterminées du signal hôte pour produire un signal hôte filtré (4;22),
un moyen de codage (5) pour coder les informations auxiliaires à l'intérieur du signal hôte filtré en utilisant une technique de corrélation croisée pour produire un signal codé,
**caractérisé en ce que** le système de codage comprend de plus:
un moyen d'augmentation de composante de signal (8;21) pour augmenter les composantes de fréquence prédéterminées précédemment réduites
et dans lequel les composantes de fréquence prédéterminées sont sélectionnées à partir d'au moins une des composantes suivantes:
a) composantes de basse fréquence, et
b) composantes sonores dominantes.

7. Système de codage selon la revendication 6, dans lequel ledit moyen de filtrage (2;20) inclut un suppresseur passe-bas (2) pour enlever des composantes de basse fréquence du signal hôte (1) et le moyen d'augmentation de composante de signal (8;21) inclut un moyen de sommation (8) pour ajouter les composantes de basse fréquence enlevées au signal codé (9).

8. Système de codage selon la revendication 6, dans lequel ledit moyen de filtrage (2;20) inclut un premier moyen sous forme de filtre (20) ayant une caractéristique de filtre adaptée pour enlever substantiellement des composantes sonores dominantes du signal hôte (1) et le moyen d'augmentation de composante de signal (8;21) inclut un deuxième filtre (21), dans lequel le deuxième filtre a une caractéristique de filtre correspondant à la caractéristique inverse du premier filtre.

9. Système de transmission (89) comprenant une section d'entrée (80) pour recevoir un signal à diffuser, un système de codage (81) selon la revendication 6 pour accepter le signal à diffuser à partir de la section d'entrée et l'encoder avec des informations auxiliaires pour fournir un signal avec inclusion et une section de sortie (83) adaptée pour transmettre le signal avec inclusion dans un canal de communication.

10. Procédé de décodage d'informations auxiliaires à partir d'un signal hôte avec inclusion (9) comprenant les étapes suivantes:
filtrage du signal hôte avec inclusion pour produire un signal modifié,
décodage des informations auxiliaires (13) à partir du signal modifié en utilisant une technique de corrélation croisée,
**caractérisé en ce que** l'étape de filtrage (10;200) réduit l'amplitude d'au moins une des composantes suivantes dans le signal hôte:
a) composantes de basse fréquence, et
b) composantes sonores dominantes.

11. Procédé selon la revendication 10, dans lequel l'étape de filtrage (10;200) inclut l'utilisation d'une caractéristique de filtre pour réduire des composantes sonores dominantes dans le signal hôte avec inclusion.

12. Procédé selon la revendication 10, dans lequel l'étape de filtrage (10;200) inclut le retrait de composantes de basse fréquence du signal hôte avec inclusion.

13. Système de décodage pour enlever des informations auxiliaires (13) incluses à l'intérieur d'un signal hôte (1) comprenant:
un moyen de filtrage (10;200) pour réduire des composantes de fréquence prédéterminées dans le signal hôte avec inclusion,
un moyen de décodage (12) pour extraire les informations auxiliaires (13) du signal hôte filtré en utilisant une technique de corrélation croisée,
**caractérisé en ce que** les composantes de fréquence prédéterminées sont sélectionnées à partir d'au moins une des composantes suivantes:
a) composantes de basse fréquence, et
b) composantes sonores dominantes.

14. Système de décodage selon la revendication 13, dans lequel ledit moyen de filtrage (10;200) inclut un suppresseur passe-bas (10) pour enlever des composantes de basse fréquence du signal hôte avec inclusion.

15. Système de décodage selon la revendication 13, dans lequel ledit moyen de filtrage inclut un premier moyen sous forme de filtre (200) ayant une caractéristique de filtre adaptée pour enlever substantiellement des composantes sonores dominantes du signal hôte.

16. Système récepteur (99) comprenant une section d'entrée (91) adaptée pour recevoir un signal avec inclusion d'un canal de communication, et un système de décodage (92) selon la revendication 13 couplé à ladite section d'entrée et étant adapté à l'extraction d'informations auxiliaires à partir du signal avec inclusion.
